# EUROPÄISCHE PATENTSCHRIFT

(11) **EP 3 715 690 B1**
(45) Veröffentlichungstag und Bekanntmachung des Hinweises auf die Patenterteilung: **02.09.2026**
(21) Anmeldenummer: 20165661.8
(22) Anmeldetag: 25.03.2020
(51) Int. Cl.: F16L 27/08, F16L 37/088, F16L 37/53, H02G 3/06

(54) **VERFAHREN ZUR DREHBAREN DURCHFÜHRUNG EINER NICHT DREHBAREN SCHLAUCH-/KABELVERSCHRAUBUNG**
METHOD FOR ROTATING A NON-ROTATING HOSE/CABLE FITTING
PROCÉDÉ POUR RENDRE PIVOTANT UN RACCORD À VIS NON PIVOTANT POUR TUYAUX OU CÂBLES

(30) Priorität: 28.03.2019 DE 102019002285
(43) Veröffentlichungstag der Anmeldung: 30.09.2020
(73) Patentinhaber: Lapp Engineering AG, 6330 Cham (CH)
(72) Erfinder: Rentschler, Benjamin, 71083 Herrenberg (DE); Wegerer, Matthias, 70771 Leinfelden-Echterdingen (DE)
(74) Vertreter: Schmidt, Steffen J.

(56) Entgegenhaltungen:
- EP-A2- 1 898 506
- DE-U1- 202007 003 957
- FR-A1- 2 752 905
- GB-A- 839 680
- US-A- 3 773 360
- US-A- 4 079 969
- US-A- 4 478 435

## Beschreibung

Die Erfindung betrifft Verfahren zur drehbaren Durchführung einer nicht drehbaren Schlauch-/Kabelverschraubung.

Schlauchverschraubungen kommen beispielsweise zum Einsatz, um Kabelschutzschläuche an elektrischen Anlagenkomponenten und speziell den zugehörigen Schaltschränken anzubringen. Aus dem Stand der Technik sind diverse Schlauchverschraubungen bekannt.

Beim Anschluss an drehbare Komponenten müssen die Schlauchverschraubungen drehbar ausgestaltet sein um ein Verdrillen der Schläuche zu verhindern. Eine derartige Schlauchverschraubung ist aus der DE 77 08 209 U1 bekannt. Schraubansatz und Führungsansatz sind drehbar zueinander gelagert wobei zwischen Schraubansatz und Führungsansatz ist Dichtung angeordnet ist. Durch Zugkräfte kann der Schraubansatz vom Führungsansatz gelöst werden, wodurch die Schlauchverschraubung auseinandergerissen wird. Für nicht drehbare Anwendungsfälle weist die Schlauchverschraubung zudem eine zu komplizierte und damit teure Bauform auf.

Die DE 20 2007 003 957 U1 beschreibt eine Kabelverschraubung mit einer Schraubhülse und einer mit einem Innengewinde versehenen Überwurfmutter. Die Schraubhülse ist zwischen einem Haltestück mit Außengewinde und der Überwurfmutter angeordnet. In Ringnuten des Haltestücks und der Überwurfmutter ist ein Sprengring eingesetzt.

Die EP 1 898 506 A2 beschreibt eine Kabel- oder Schlauchverschraubung mit einem Druckelement mit Innengewinde und mit einem Stutzen mit Außengewinde. In Ringnuten des Druckelements und des Stutzens ist ein Kunststoffring mit rechteckförmigem Querschnitt angeordnet.

Die DE 20 2007 003 957 U1 offenbart eine Kabelverschraubung mit Schraubhülse und Überwurfmutter. Die Kabelverschraubung weist ein in der Durchfuhröffnung der Wandung in Drehrichtung sowie in axialer Richtung festlegbares Haltestück auf. Dieses Haltestück weist eine in Gebrauchsstellung axiale gegenüber der Wandung überstehende Führung auf, an welche die Schraubhülse in axialer Richtung verschiebbar aber drehfest angeordnet ist.

Die EP 1 898 506 A2 offenbart eine Kabel- oder Schlauchverschraubung. Die Kabel- oder Schlauchverschraubung weist einen mit einem Gehäuse verbindbare, hohlzylinderförmige Stutzen und ein mit dem Stutzen um eine Längsachse des Stutzens drehbar verbundenes Druckelement auf.

Die FR 2 752 905 A1 offenbart eine manipulationssichere Schlauchverbindung, insbesondere für Wasserzähler.

Die US 3 7773 360 A offenbart eine Schnellkupplung zum Verbinden und Trennen eines Paares von ineinandergreifenden männlichen und weiblichen Kupplungselementen, die ein elastisches Verriegelungselement aufweist, das von dem männlichen Kupplungselement getragen wird und mit dem weiblichen Kupplungselement bei axialem Eingriff der Kupplungselemente in verriegeltem Zustand einrastet.

Aus der US 4 478 435 A ist eine Drehkupplungsvorrichtung zum Verbinden von Leitungen, die ein unter Druck stehendes Fluid führen und zwischen denen eine relative Drehung erforderlich ist, bekannt. Die Vorrichtung weist einen Außenkörper mit einer axial darin ausgebildeten Bohrung auf, die sich vollständig durch diesen hindurch erstreckt.

Aus der US 4 079 969 A ist ein Drehverbinder zwischen einem flexiblen Schlauch und einer Düse bekannt. Der Drehverbinder weist einen verjüngten Abschnitt eines ersten Körpers auf, der an der Düse befestigt ist. Der Drehverbinder weist einen erweiterten Abschnitt eines zweiten Körpers auf, der an dem Schlauch befestigt ist, wobei der erste und der zweite Körper einen erweiterten Abschnitt des ersten Körpers aufweisen, der einen verjüngten Abschnitt des zweiten Körpers überlappt. Dadurch werden ausgerichtete Durchgänge bereitgestellt, um eine Verbindung zwischen dem Schlauch und der Düse herzustellen. Aus der GB 839 680 A ist eine drehbare Rohrverbindung zum Verbinden einer Gasleitung mit einem Gasgerät bekannt, aufweisend zwei ineinanderpassende Rohrteile, die durch einen Sprengring in ringförmigen Nuten in den Teile jeweils zusammengehalten werden. Die Verbindung zwischen den Teilen wird durch einen Gummi-O-Ring abgedichtet, der in einer ringförmigen Nut in einem Teil gehalten wird und gegen das andere Teil drückt. Oftmals müssen an einem Einbauort sowohl drehbare als auch nicht drehbare Schlauchverschraubungen eingesetzt werden. Hierdurch muss jeweils eine Vielzahl an Schlauchverschraubungen vorrätig gehalten und mitgeführt werden. Dies ist mit einem hohen Lageraufwand verbunden.

Der Erfindung liegt daher die Aufgabe zu Grunde, ein Verfahren anzugeben, mit dem bekannte nicht drehbare Schlauchverschraubungen nachgerüstet werden und wodurch diese für drehbare Durchführungen einsetzbar werden

Diese Aufgabe wird mit einem Verfahren gelöst, welches die in Anspruch 1 angegebenen Merkmale aufweist. Vorteilhafte Ausgestaltungen der Erfindung sind in weiteren Ansprüchen angegeben.

Verfahren zur drehbaren Durchführung einer nicht drehbaren Schlauch-/Kabelverschraubung, umfassend die Schritte:-Bereitstellen eines Adapters
- Bereitstellen der nicht drehbaren Schlauch-/Kabelverschraubung, aufweisend ein zu dem Innengewinde des Adapters korrespondierendes Aussengewinde;
- Bereitstellen einer Wandung oder Bohrung, aufweisend ein zu dem Aussengewinde des Adapters korrespondierendes Innengewinde;
- Verschrauben des Adapters mit der Wandung oder Bohrung;
   - Aufschrauben der nicht drehbaren Schlauch-/Kabelverschraubung auf den Adapter.

Der Adapter für eine Schlauchverschraubung umfasst einen ersten Stutzen, welcher einen durchgehenden Stutzenkanal und ein Innengewinde aufweist, und einen zweiten Stutzen, welcher einen durchgehenden Stutzenkanal und ein Aussengewinde aufweist, wobei sich der Stutzenkanal des ersten Stutzens und der Stutzenkanals des zweiten Stutzens zumindest teilweise überlappen.

Über das Aussengewinde des zweiten Stutzens kann der Adapter mit einer Montagewand, gegebenenfalls mit einer Gegenmutter, verschraubbar sein. In das Innengewinde des ersten Stutzens kann eine Schlauchverschraubung oder eine Kabelverschraubung einschraubbar sein.

Zwischen dem ersten Stutzen und dem zweiten Stutzen ist ein Sprengring, welcher zumindest teilweise in einer am ersten Stutzen angeformten Haltenut und zumindest teilweise in einer am zweiten Stutzen angeformten Haltenut gelagert ist, angeordnet. Der erste Stutzen und der zweite Stutzen sind hierdurch drehbar miteinander verbunden.

Eine nicht drehbare Schlauchverschraubung kann durch einschrauben in den Adapter drehbar gemacht werden. Am zweiten Stutzen kann ein erster Dichtring zur Abdichtung gegen eine Wand vorgesehen sein. Hierdurch wird eine den Anforderungen des Einsatzfalls entsprechende Dichtqualität ermöglicht. Vorzugsweise kann zwischen dem ersten Stutzen und dem zweiten Stutzen ein zweiter Dichtring angeordnet sein. Hierdurch wird die Dichtqualität innerhalb des Adapters verbessert.

Am zweiten Stutzen kann ein konvex ausgestalteter Dichtflansch zur Aufnahme des ersten Dichtrings angeformt sein. Hierdurch wird der erste Dichtring optimal und stabil gelagert.

Vorzugsweise kann der erste Stutzen und/oder der zweite Stutzen jeweils zumindest eine Schlüsselfläche zum Anlegen eines Werkzeugs, insbesondere eines Schraubenschlüssels, aufweisen. Hierdurch kann der Adapter einfach und mit dem notwendigen Drehmoment mit der Schlauchverschraubung und der Durchführwand verschraubt werden.

In einer weiteren Ausgestaltung kann am ersten Stutzen eine Aufnahmenut zur Lagerung des zweiten Dichtrings angeformt sein. Hierdurch wird der zweite Dichtring zwischen dem ersten Stutzen und dem zweiten Stutzen stabil und dichtend gelagert.

In einer besonders bevorzugten Ausgestaltung kann der erste Dichtring und/oder der zweite Dichtring mit einer dichtungsverbessernden Beschichtung überzogen sein. Hierdurch werden die Dichtwirkung und die Langlebigkeit verbessert.

Der Sprengring kann vorzugweise aus einem elastischen Material, vorzugsweise aus Federstahl oder einem elastischen Kunststoffmaterial gefertigt sein.

In einer weiteren besonders bevorzugten Ausgestaltung kann/können der erste Stutzen und/oder der zweite Stutzen aus Messing, Aluminium, rostfreiem Stahl oder einer rostfreien Legierung gefertigt sein.

In einer weiteren besonders bevorzugten Ausgestaltung kann der Sprengring eine Ringöffnung aufweisen. Hierdurch ist der Sprengring einfach - durch leichtes zusammendrücken oder auseinanderziehen - eine eine Haltenut einführbar. Vorzugsweise weist der Sprengring einen rechteckigen Querschnitt auf. Hierdurch ist der Sprengring stabil in den Haltenuten lagerbar.

Mit einem erfindungsgemässen Adapter kann eine ebenfalls erfindungsgemässe Schlauchverschraubung baubar. Hierzu kann eine aus dem Stand der Technik bekannt Schlauchverschraubung auf das Innengewinde des ersten Stutzens aufgeschraubt werden.

Nachfolgend wird die Erfindung anhand von Zeichnungen näher erläutert. Dabei zeigt:
- Fig. 1a: einen erfindungsgemässen Adapter 1 für Schlauchverschraubungen;
- Fig. 1b: den Adapter 1 aus Fig. 1a mit einem Viertelschnitt;
- Fig. 2: den Adapter 1 aus Fig. 1a in einer teilweise geschnittenen Darstellung;
- Fig. 3a: den Adapter 1 aus Fig. 1a in einer Explosionsdarstellung;
- Fig. 3b: den Adapter 1 aus Fig. 3b in einer teilweise geschnittenen Darstellung.

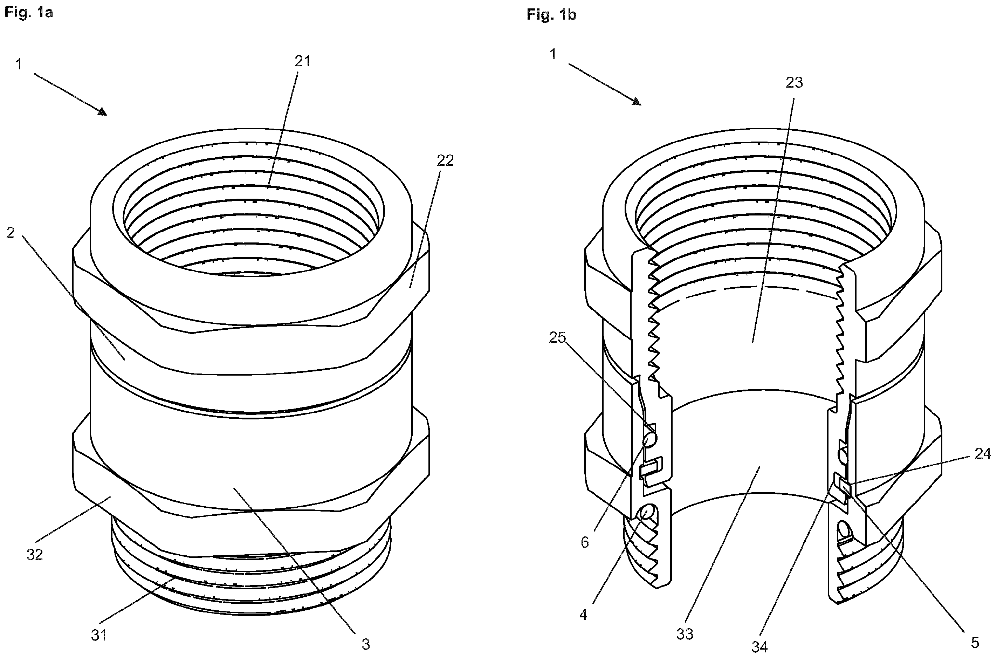

Fig. 1a zeigt einen erfindungsgemässen Adapter 1 für Schlauchverschraubungen. Der Adapter 1 umfasste einen ersten Stutzen 2 und einen zweiten Stutzen 3, welche miteinander verbunden sind. Der erste Stutzen 2 weist ein Innengewinde 21 auf, auf welches ein korrespondierendes Aussengewinde, vorzugsweise einer Schlauchverschraubung, aufschraubbar ist. An der Aussenseite des ersten Stutzens ist eine Schlüsselfläche 22 angeformt. An der Schlüsselfläche 22 ist ein Werkzeug, insbesondere ein Schraubenschlüssel, anlegbar. Der zweite Stutzen 3 weist ebenfalls eine Schlüsselfläche 32 an der Aussenseite auf. Der zweite Stutzen 3 weist zudem ein Aussengewinde 31, mit welchem der Adapter mit einem korrespondierenden Innengewinde, vorzugsweise einer Wandung oder Bohrung, verschraubbar ist.

Fig. 1b zeigt den Adapter 1 aus Fig. 1a mit einem Viertelschnitt. Der erste Stutzen 2 weist einen durchgehenden Stutzenkanal 23 auf. Der zweite Stutzen 3 weist einen durchgehenden Stutzenkanal 33 auf. Die Stutzenkanäle 23 und 33 formen zusammen einen durchgehenden Kanal, durch welchen Flüssigkeiten, Gase oder ein elektrisches Kabel durchführbar sind. Am zweiten Stutzen 3 ist ein erster Dichtring 4 angeordnet, welche den Übergang zwischen dem Adapter und einer Wandung abdichtet. Am ersten Stutzen 2 ist eine Haltenut 24 angeformt, in welcher ein Sprengring 5 angeordnet ist. Der Sprengring 5 ist so ausgestaltet, dass er die Haltenut 24 überragt, wobei der überragende Teil in eine Haltenut 34 am zweiten Stutzen eingreift, wodurch der erste Stutzen 2 und der zweite Stutzen 3 mechanisch stabil und drehbar verbunden sind.

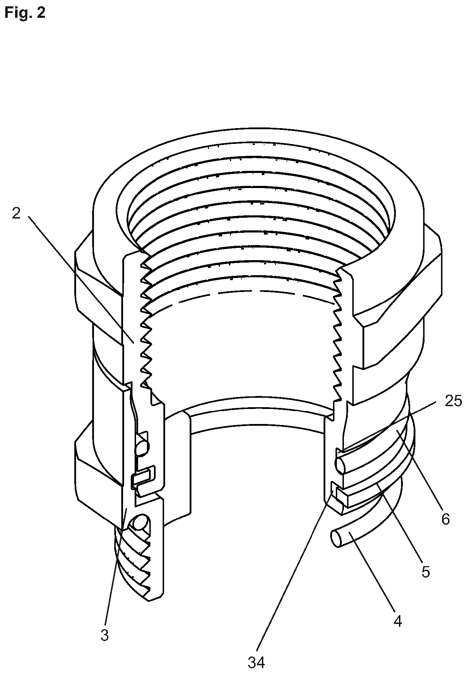

Fig. 2 zeigt den Adapter 1 aus Fig. 1a in einer teilweise geschnittenen Darstellung.

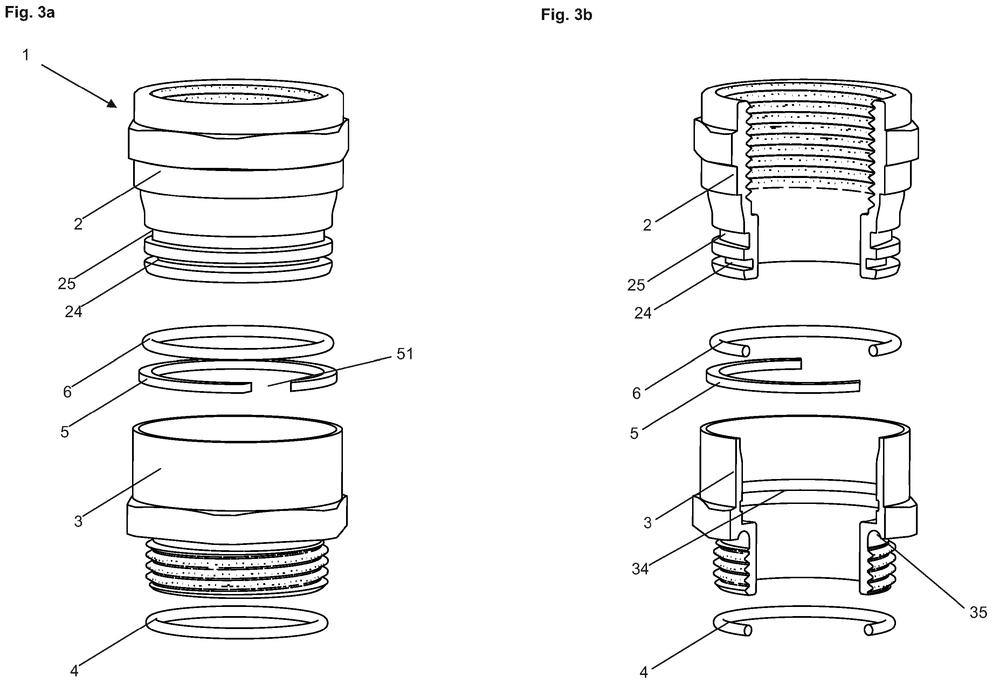

Fig. 3a zeigt den Adapter 1 aus Fig. 1a in einer Explosionsdarstellung. Der Sprengring 5 weist eine Ringöffnung 51 auf.

Fig. 3b zeigt den Adapter 1 aus Fig. 3b in einer teilweise geschnittenen Darstellung. Am zweiten Stutzen 3 ist Dichtflansch 35 zur Aufnahme des ersten Dichtrings 4 angeformt.

### Bezugszeichenliste

- 1: Adapter
- 2: erster Stutzen
- 21: Innengewinde
- 22: Schlüsselfläche
- 23: Stutzenkanal
- 24: Haltenut
- 25: Aufnahmenut
- 3: zweiter Stutzen
- 31: Aussengewinde
- 32: Schlüsselfläche
- 33: Stutzenkanal
- 34: Haltenut
- 35: Dichtflansch
- 4: erster Dichtring
- 5: Sprengring
- 51: Ringöffnung
- 6: zweiter Dichtring

## Patentansprüche

1. Verfahren zur drehbaren Durchführung einer nicht drehbaren Schlauch-/Kabelverschraubung, um Kabelschutzschläuche an elektrischen Anlagenkomponenten anzubringen, umfassend die Schritte:
- Bereitstellen eines Adapters (1), aufweisend:
einen ersten Stutzen (2), welcher einen durchgehenden Stutzenkanal (23) und ein Innengewinde (21) aufweist, und einem zweiten Stutzen (3), welcher einen durchgehenden Stutzenkanal (33) und ein Aussengewinde (32) aufweist, wobei sich der Stutzenkanal (23) des ersten Stutzens (2) und der Stutzenkanals (33) des zweiten Stutzens (3) zumindest teilweise überlappen, wobei zwischen dem ersten Stutzen (2) und dem zweiten Stutzen (3) ein Sprengring (5), welcher zumindest teilweise in einer am ersten Stutzen (2) angeformten Haltenut (24) und zumindest teilweise in einer am zweiten Stutzen (3) angeformten Haltenut (34) gelagert ist, angeordnet ist, sodass der erste Stutzen (2) und der zweite Stutzen (3) drehbar miteinander verbunden sind;
- Bereitstellen der nicht drehbaren Schlauch-/Kabelverschraubung, aufweisend ein zu dem Innengewinde (21) des Adapters (1) korrespondierendes Aussengewinde;
- Bereitstellen einer Wandung oder Bohrung, aufweisend ein zu dem Aussengewinde (32) des Adapters korrespondierendes Innengewinde;
- Verschrauben des Adapters (1) mit der Wandung oder Bohrung;
- Aufschrauben der nicht drehbaren Schlauch-/Kabelverschraubung auf den Adapter.

2. Verfahren nach Anspruch 1 , wobei der Adapter **dadurch gekennzeichnet ist, dass** am zweiten Stutzen (3) ein erster Dichtring (4) zur Abdichtung gegen eine Wand vorgesehen ist und/oder dass zwischen dem ersten Stutzen (2) und dem zweiten Stutzen (3) ein zweiter Dichtring (6) angeordnet ist.

3. Verfahren nach Anspruch 1 oder 2, wobei der Adapter **dadurch gekennzeichnet ist, dass** am zweiten Stutzen (3) ein konvex ausgestalteter Dichtflansch (35) zur Aufnahme des ersten Dichtrings (4) angeformt ist.

4. Verfahren nach Anspruch 1, 2 oder 3, wobei der Adapter **dadurch gekennzeichnet ist, dass** der erste Stutzen (2) und/oder der zweite Stutzen (3) jeweils zumindest eine Schlüsselfläche (22, 32) zum Anlegen eines Werkzeugs, insbesondere eines Schraubenschlüssels, aufweisen.

5. Verfahren nach einem der Ansprüche 1 bis 4, wobei der Adapter **dadurch gekennzeichnet ist, dass** am ersten Stutzen (2) eine Aufnahmenut (25) zur Lagerung des zweiten Dichtrings (6) angeformt ist.

6. Verfahren nach einem der Ansprüche 1 bis 5, wobei der Adapter **dadurch gekennzeichnet, dass** der erste Dichtring (4) und/oder der zweite Dichtring (6) mit einer dichtungsverbessernden Beschichtung überzogen ist.

7. Verfahren nach einem der Ansprüche 1 bis 6, wobei der Adapter **dadurch gekennzeichnet ist, dass** der Sprengring (5) aus einem elastischen Material, vorzugsweise aus Federstahl oder einem elastischen Kunststoffmaterial gefertigt ist.

8. Verfahren nach einem der Ansprüche 1 bis 7, wobei der Adapter **dadurch gekennzeichnet ist, dass** der erste Stutzen (2) und/oder der zweite Stutzen (3) aus Messing, Aluminium, rostfreiem Stahl oder einer rostfreien Legierung gefertigt ist.

9. Verfahren nach einem der Ansprüche 1 bis 8, wobei der Adapter **dadurch gekennzeichnet ist, dass** der Sprengring (5) eine Ringöffnung (51) aufweist und/oder dass der Sprengring (5) einen rechteckigen Querschnitt aufweist.

## Claims

1. A method for a rotatable guide-through of a non-rotatable hose/cable fitting to attach cable protection conduits to electrical system components includes the following steps:
- providing an adapter (1) comprising:
a first nozzle (2) having a continuous nozzle channel (23) and an internal thread (21), and a second nozzle (3) having a continuous nozzle channel (33) and an external thread (32), wherein the nozzle channel (23) of the first nozzle (2) and the nozzle channel (33) of the second nozzle (3) overlap at least partially, wherein a snap ring (5) is located between the first nozzle (2) and the second nozzle (3) and is at least partially located in a retaining groove (24) formed on the first nozzle (2) and at least partially supported in a retaining groove (34) formed at the second nozzle (3), such that that the first nozzle (2) and the second nozzle (3) are rotatably connected to each other;
- providing the non-rotatable hose/cable fitting having an external thread corresponding to the internal thread (21) of the adapter (1);
- providing a wall or bore having an internal thread corresponding to the external thread (32) of the adapter;
- screw the adapter (1) to the wall or bore;
- screw the non-rotating hose/cable fitting onto the adapter.

2. The method according to claim 1, wherein the adapter is **characterized in that** a first sealing ring (4) is provided on the second nozzle (3) for sealing against a wall and/or that a second sealing ring (6) is arranged between the first nozzle (2) and the second nozzle (3).

3. The method according to claim 1 or 2, wherein the adapter is **characterized in that** a convexly shaped sealing flange (35) for receiving the first sealing ring (4) is formed on the second nozzle (3).

4. The method according to claim 1, 2 or 3, wherein the adapter is **characterized in that** the first nozzle (2) and/or the second nozzle (3) each have at least one wrench flat (22, 32) for applying a tool, in particular a wrench.

5. The method according to one of claims 1 to 4, wherein the adapter is **characterized in that** a receiving groove (25) for receiving the second sealing ring (6) is formed on the first nozzle (2).

6. The method according to one of claims 1 to 5, wherein the adapter is **characterized in that** the first sealing ring (4) and/or the second sealing ring (6) is coated with a sealing-improving coating.

7. The method according to any one of claims 1 to 6, wherein the adapter is **characterized in that** the snap ring (5) is made of an elastic material, preferably spring steel or an elastic plastic material.

8. The method according to any one of claims 1 to 7, wherein the adapter is **characterized in that** the first nozzle (2) and/or the second nozzle (3) is made of brass, aluminium, stainless steel or a stainless alloy.

9. The method according to any one of claims 1 to 8, wherein the adapter is **characterized in that** the snap ring (5) has a ring opening (51) and/or that the snap ring (5) has a rectangular cross-section.

## Revendications

1. Une méthode d'installation rotative d'un raccord de tuyau/câble non rotatif, pour fixer les conduits de protection des câbles aux composants du système électrique, comprenant les étapes suivantes:
- fournir un adaptateur (1) comprenant:
une première buse (2) ayant un canal de buse continu (23) et un filetage intérieur (21), et une deuxième buse (3) ayant un canal de buse continu (33) et un filetage extérieur (32), dans lesquels le canal de buse (23) de la première buse (2) et le canal de buse (33) de la deuxième buse (3) se chevauchent au moins partiellement, dans lequel un anneau de retenue (5) est situé entre la première buse (2) et la deuxième buse (3), retenue au moins partiellement situé dans un évidement formé sur la première buse (2) rainure de retenue (24) et au moins partiellement retenue dans la rainure de retenue (34) moulée dans la deuxième buse (3) de telle sorte que la première buse (2) et la deuxième buse (3) soient reliées de manière rotative l'une à l'autre;
- fournir le raccord de tuyau/câble non rotatif ayant un filetage extérieur correspondant au filetage intérieur (21) de l'adaptateur (1);
- fournir une paroi ou un alésage ayant un filetage intérieur correspondant au filetage extérieur (32) de l'adaptateur;
- vissez l'adaptateur (1) au mur ou au trou ;
- vissez le raccord de tuyau/câble non rotatif sur l'adaptateur.

2. La méthode selon la revendication 1, dans laquelle l'adaptateur est **caractérisé en ce qu'**un premier anneau d'étanchéité (4) est prévu sur la deuxième buse (3) pour assurer l'étanchéité contre une paroi et/ou qu'un deuxième anneau d'étanchéité (6) est disposé entre la première buse (2) et la deuxième buse (3).

3. La méthode selon la revendication 1 ou 2, dans laquelle l'adaptateur est **caractérisé en ce qu'**une bride d'étanchéité de forme convexe (35) destinée à recevoir le premier anneau d'étanchéité (4) est formée sur la deuxième buse (3).

4. La méthode selon la revendication 1, 2 ou 3, dans laquelle l'adaptateur est **caractérisé en ce que** la première buse (2) et/ou la deuxième buse (3) comportent chacune au moins un méplat pour clé (22, 32) destiné à l'application d'un outil, notamment d'une clé.

5. La méthode selon l'une des revendications 1 à 4, dans laquelle l'adaptateur est **caractérisé en ce qu'**une rainure de réception (25) destinée à ranger le deuxième joint d'étanchéité (6) est formée sur la première buse (2).

6. La méthode selon l'une des revendications 1 à 5, dans laquelle l'adaptateur est **caractérisé en ce que** la première bague d'étanchéité (4) et/ou la deuxième bague d'étanchéité (6) est revêtue d'un revêtement améliorant l'étanchéité.

7. La méthode selon l'une quelconque des revendications 1 à 6, dans laquelle l'adaptateur est **caractérisé en ce que** l'anneau élastique (5) est fait d'un matériau élastique, de préférence en acier à ressort ou en matériau plastique élastique.

8. La méthode selon l'une quelconque des revendications 1 à 7, dans laquelle l'adaptateur est **caractérisé en ce que** la première buse (2) et/ou la deuxième buse (3) sont en laiton, en aluminium, en acier inoxydable ou en alliage inoxydable.

9. La méthode selon l'une quelconque des revendications 1 à 8, dans laquelle l'adaptateur est **caractérisé en ce que** l'anneau élastique (5) a une ouverture annulaire (51) et/ou que l'anneau élastique (5) a une section transversale rectangulaire.
